# EUROPÄISCHE PATENTSCHRIFT

(11) **EP 3 232 052 B1**
(45) Veröffentlichungstag und Bekanntmachung des Hinweises auf die Patenterteilung: **22.05.2019**
(21) Anmeldenummer: 17165229.0
(22) Anmeldetag: 06.04.2017
(51) Int. Cl.: F03D 7/02, H01F 38/18, F03D 80/80, F03D 9/25

(54) **WINDENERGIEANLAGE**
WIND ENERGY SYSTEM
ÉOLIENNE

(30) Priorität: 15.04.2016 DE 102016206395
(43) Veröffentlichungstag der Anmeldung: 18.10.2017
(73) Patentinhaber: Venpower GmbH, 16835 Rüthnick (DE)
(72) Erfinder: HEIN, Peter, 16835 Rüthnick (DE)
(74) Vertreter: Fischer, Uwe

(56) Entgegenhaltungen:
- EP-A2- 1 742 235
- WO-A1-2010/049027
- WO-A1-2012/055443
- DE-A1-102010 040 366

## Beschreibung

Die Erfindung bezieht sich auf Windenergieanlagen zum Erzeugen elektrischer Energie mit mindestens einem an einer Gondel drehbar befestigten Propeller, einem mit dem Propeller gekoppelten Generator und einem die Gondel tragenden Turm, wobei die Gondel relativ zum Turm drehbar ist.

Bei herkömmlichen Windenergieanlagen erfolgt ein Drehen der Gondel relativ zum Turm mittels Direktantrieben, Hybridantrieben oder mehrstufigen Getrieben. Die Energieübertragung zwischen Gondel und Turm erfolgt üblicherweise mittels Kabel.

Aus den Druckschriften WO2012/055443 A1 und WO2010/049027 A1 sind außerdem Windenergieanlagen bekannt, bei denen zwischen der Gondel und dem Turm ein elektromagnetischer Drehübertrager angeordnet ist, der die von dem Generator erzeugte elektrische Energie zum Turm übertragen kann.

Der Erfindung liegt die Aufgabe zugrunde, eine Windenergieanlage der oben beschriebenen Art hinsichtlich der Schnittstelle zwischen Gondel und Turm zu verbessern.

Diese Aufgabe wird erfindungsgemäß durch eine Windenergieanlage mit den Merkmalen gemäß Patentanspruch 1 gelöst. Vorteilhafte Ausgestaltungen der erfindungsgemäßen Windenergieanlage sind in Unteransprüchen angegeben.

Ein wesentlicher Vorteil der erfindungsgemäßen Windenergieanlage ist darin zu sehen, dass bei dieser ein elektromagnetischer Drehübertrager angeordnet ist. Ein solcher Drehübertrager ermöglicht zum einen ein beliebiges Drehen der Gondel um den Turm, ohne dass ein Zurückdrehen nötig ist, also anders als bei herkömmlichen Windenergieanlagen mit Kabelschnittstelle zwischen Gondel und Turm.

Darüber hinaus kann der Drehübertrager dazu verwendet werden, das Spannungsniveau an der Ausgangsseite des Generators an das Spannungsniveau eines mit Energie zu speisenden Energieübertragungsnetzes anzupassen. Beispielsweise ist es möglich, mittels des Drehübertragers die vom Generator üblicherweise erzeugte Niederspannung bzw. üblicherweise nur kleine Mittelspannung (im allgemeinen bis maximal 4 kV) auf ein höheres Mittelspannungsniveau hoch zu transformieren, beispielsweise auf ein Mittelspannungsniveau von 20 kV. Durch ein solches Hochtransformieren ist es möglich, im Turmbereich, also vom Fundament der Windenergieanlage bis zur Schnittstelle zwischen Gondel und Turmspitze eine vom Querschnitt her relativ dünne Energieübertragungsleitung einzusetzen.

Ein weiterer wesentlicher Vorteil der erfindungsgemäßen Windenergieanlage besteht darin, dass durch eine geeignete elektrische Ansteuerung des Drehübertragers zwischen der Primärseite und der Sekundärseite durch den Drehübertrager ein Drehmoment erzeugt werden kann, durch das sich die Gondel relativ zum Turm verschwenken lässt. Mit anderen Worten kann der Drehübertrager eine doppelte Funktion ausüben: Zum einen kann er ein Hochtransformieren bzw. eine Veränderung des Spannungsniveaus zwischen der Ausgangsspannung des Generators und dem zu speisenden Energieübertragungsnetz vornehmen, und zum anderen kann er ein Drehmoment zum Verschwenken der Gondel bereitstellen, wenn dies gewünscht ist. Ein separater Gondelantrieb ist somit bei der erfindungsgemäßen Windenergieanlage nicht notwendig.

Bei dem Drehübertrager handelt es sich vorzugsweise um einen elektrischen Transformator, bei dem die Primärseite gegenüber der Sekundärseite gedreht werden kann.

Der Drehübertrager umfasst bevorzugt mindestens ein primäres Drehstromspulensystem und mindestens ein sekundäres Drehstromspulensystem, die jeweils paarweise über einen Spalt mechanisch voneinander getrennt, aber magnetisch miteinander gekoppelt sind.

Auf der Primärseite des Drehübertragers bilden vorzugsweise elektrische Spulenpakete in Form von Spulenringsegmenten mindestens ein ringförmiges primäres Drehstromspulensystem, das unter Bildung mindestens eines ringförmigen Luftspaltes mindestens einem ringförmigen sekundären Drehstromspulensystem auf der Sekundärseite gegenüberliegt. Das ringförmige sekundäre Drehstromspulensystem wird vorzugsweise ebenfalls durch elektrische Spulenpakete in Form von Spulenringsegmenten gebildet; diese liegen denen des primären Drehstromspulensystems gegenüber. Die Drehstromspulensysteme sind vorzugsweise dreiphasig oder aber mindestens dreiphasig.

Die Wicklungszahl auf der Primärseite des Drehübertragers und die auf der Sekundärseite des Drehübertragers sind vorzugsweise derart gewählt, dass die auf der Sekundärseite erzeugte Sekundärspannung größer als die auf der Primärseite eingespeiste Primärspannung ist.

Die Primärspannung auf der Primärseite des Drehübertragers liegt vorzugsweise im Bereich zwischen 100 V und 4 kV.

Das Übertragungsverhältnis des Drehübertragers ist bevorzugt derart gewählt, dass die Sekundärspannung auf der Sekundärseite im Bereich zwischen 10 und 100 kV liegt.

Der Umrichter ist neben seiner Grundfunktion, die im Generator erzeugte elektrische Energie an die Netzeinspeisung anzupassen und zu übertragen vorzugsweise derart ausgestaltet, dass er den in die Primärseite des Drehübertragers eingespeisten Strom derart einstellen kann, dass der Drehübertrager ein mechanisches Drehmoment zum Drehen der Gondel relativ zum Turm erzeugen kann. Das entsprechende Einstellen des Stromes kann beispielsweise durch Wahl der Amplitude, Frequenz und/oder Phasenlage des in den Drehübertrager eingespeisten Speisestromes relativ zur Amplitude, Frequenz und/oder Phasenlage des zu speisenden Energieübertragungsnetzes erfolgen.

Beispielsweise kann die Steuereinrichtung den Umrichter derart ansteuern, dass dieser den in die Primärseite des Dreh übertragers eingespeisten Strom derart einstellt, dass der Drehübertrager ein mechanisches Drehmoment zum Drehen der Gondel relativ zum Turm erzeugt. Das entsprechende Einstellen des Stromes kann die Steuereinrichtung beispielsweise durch Wahl der Amplitude, Frequenz und/oder Phasenlage des in den Drehübertrager eingespeisten Stromes relativ zur Amplitude, Frequenz und/oder Phasenlage des zu speisenden Energieübertragungsnetzes vornehmen.

Alternativ oder zusätzlich kann die Steuereinrichtung (zum Beispiel mittels eines Schalters oder eines geschalteten Widerstands) einem Zwischenkreis des Umrichters oder einem Zwischenkreis eines Umrichterzweigs des Umrichters Energie entnehmen, um ein Drehmoment zu erzeugen. Dabei wird eine zusätzliche asynchrone drehmomentenbildende Drehfeldkomponente im Luftspalt des Drehübertragers gebildet gemäß der Wirkungsweise eines Asynchronkäfigläufers bzw. eines Asynchroschleifringläufers, die ein Drehmoment erzeugt, welches die Gondel beschleunigt.

Alternativ oder zusätzlich kann die Steuereinrichtung - in einem Bereich zwischen dem Umrichterausgang und der Primärseite des Drehübertragers - mittels eines oder mehrerer elektrischer Schalter Phasen einer drei- oder mehrphasigen primärseitigen Anschlussleitung, die den Drehübertrager primärseitig speist, kurzschließen oder widerstandsmäßig belasten gemäß der Wirkungsweise eines Asynchronkäfigläufers bzw. eines Asynchroschleifringläufers, um eine Drehung zu verursachen.

Wenn die im Turm verlegte elektrische Leitung mit einem externen Energieübertragungsnetz mit einer vorgegebenen Netzfrequenz in Verbindung steht, ist es besonders vorteilhaft, wenn der Umrichter einen zusätzlichen Primärstrom, vorzugsweise dem Haupteinspeisestrom überlagert in den Drehübertrager einspeist, dessen Frequenz von der Netzfrequenz abweicht, wenn der Drehübertrager ein Drehmoment zum Drehen der Gondel relativ zum Turm erzeugen soll; dies führt zu einem magnetischen Schlupf zwischen dem primären Drehstromspulensystem und dem sekundären Drehstromspulensystem und somit analog zu einer Asynchronmaschine zu einem Drehmoment.

Bei einer bevorzugten Ausgestaltung ist vorgesehen, dass der Umrichter zumindest zwei Umrichterzweige aufweist, die jeweils einen Primärteilstrom erzeugen, der Drehübertrager zumindest zwei Drehübertragereinheiten aufweist, die jeweils ein primäres Drehstromspulensystem und ein mit diesem gekoppeltes sekundäres Drehstromspulensystem umfassen, die Drehübertragereinheiten eingangsseitig jeweils von einem der Umrichterzweige gespeist werden und ausgangsseitig jeweils mit der im Turm verlegten elektrischen Leitung in Verbindung stehen, und der Drehübertrager ein Drehmoment zur Drehung der Gondel relativ zum Turm hervorruft, falls von den Drehübertragereinheiten erzeugte Drehmomente ein Summendrehmoment ungleich Null erzeugen.

Bei der letztgenannten Variante ist es von Vorteil, wenn eine der Drehübertragereinheiten ein rechtsdrehendes Drehfeldsystem und ein anderes ein linksdrehendes Drehfeldsystem erzeugt. Die Steuereinrichtung und der Umrichter legen bei dieser Ausgestaltung vorzugsweise die Drehrichtung der Gondel fest, indem sie gezielt das rechtsdrehende Drehfeldsystem und das linksdrehende Drehfeldsystem in unterschiedlichem Maß mit Energie versorgen bzw. "bevorzugen".

Die Erfindung bezieht sich darüber hinaus auf ein Verfahren zum Betreiben einer Windenergieanlage zum Erzeugen elektrischer Energie, wobei die Windenergieanlage einen an einer Gondel drehbar befestigten Propeller, einen mit dem Propeller gekoppelten Generator und einen die Gondel tragenden Turm aufweist, wobei die Gondel relativ zum Turm drehbar ist.

Erfindungsgemäß ist bezüglich eines solchen Verfahrens vorgesehen, dass zwischen der Gondel und dem Turm ein elektromagnetischer Drehübertrager angeordnet ist und die von dem Generator erzeugte elektrische Energie mittels des Drehübertragers in eine im Turm verlegte elektrische Leitung eingespeist wird.

Bezüglich der Vorteile des erfindungsgemäßen Verfahrens sei auf die obigen Ausführungen verwiesen.

Vorteilhaft ist es, wenn die Gondel relativ zum Turm gedreht wird, indem mit einem zwischen dem Generator und dem Drehübertrager elektrisch angeordneten Umrichter der in die Primärseite des Drehübertragers eingespeiste Strom - beispielsweise durch Wahl von Amplitude, Frequenz oder Phase - derart eingestellt wird, dass der Drehübertrager ein mechanisches Drehmoment zum Drehen der Gondel relativ zum Turm erzeugt.

Alternativ oder zusätzlich kann vorgesehen sein, dass zum Erzeugen eines Drehmoments zum Verdrehen der Gondel zwischen ausgewählten Phasen der den Drehübertrager speisenden mehrphasigen Speiseleitung ein Kurzschluss erzeugt oder zwischen die Phasen ein Widerstand zwischengeschaltet wird, wodurch das primäre Magnetfeld modifiziert und ein Schlupf zwischen Primärfeld und Sekundärfeld hervorgerufen wird.

Alternativ oder zusätzlich kann bei Drehübertragern mit zwei oder mehr Drehübertragereinheiten vorgesehen sein, dass zum Erzeugen eines Drehmoments zum Verdrehen der Gondel bei einem oder mehreren ausgewählten Drehübertragereinheiten primärseitig weniger Speiseenergie zur Verfügung gestellt wird als bei zumindest einer anderen Drehübertragereinheit. Dies kann in vorteilhafter Weise durch Energieentnahme in zugeordneten Umrichterzweigen oder durch Energieentnahme zwischen den Umrichterzweigen und der jeweiligen Drehübertragereinheit geschehen.

Die Erfindung wird nachfolgend anhand von Ausführungsbeispielen näher erläutert; dabei zeigen beispielhaft
- Figur 1: ein Ausführungsbeispiel für eine erfindungsgemäße Windenergieanlage in einer schematischen Sicht von vorn,
- Figur 2: ein Ausführungsbeispiel für einen Umrichter und einen Drehübertrager, die für die Windenergieanlage gemäß Figur 1 geeignet sind,
- Figur 3: ein weiteres Ausführungsbeispiel für einen Umrichter und einen Drehübertrager, die bei der Windenergieanlage gemäß Figur 1 eingesetzt werden können,
- Figur 4: ein Ausführungsbeispiel für einen Schalter zum Kurzschließen zweier Phasen an der Primärseite eines Drehübertragers zum Zwecke der Drehmomenterzeugung,
- Figur 5: in einer dreidimensionalen aufgeschnittenen Sicht einen möglichen mechanischen Aufbau einer Windenergieanlage, der bei dem Ausführungsbeispiel gemäß Figur 2 eingesetzt werden kann,
- Figur 6: ein Ausführungsbeispiel für einen möglichen internen Aufbau des Umrichters gemäß Figur 2,
- Figur 7: ein Ausführungsbeispiel für einen Schalter zum Zuschalten eines Widerstands zwischen zwei Phasen an der Primärseite eines Drehübertragers zum Zwecke der Drehmomenterzeugung.

In den Figuren werden der Übersicht halber für identische oder vergleichbare Komponenten stets dieselben Bezugszeichen verwendet.

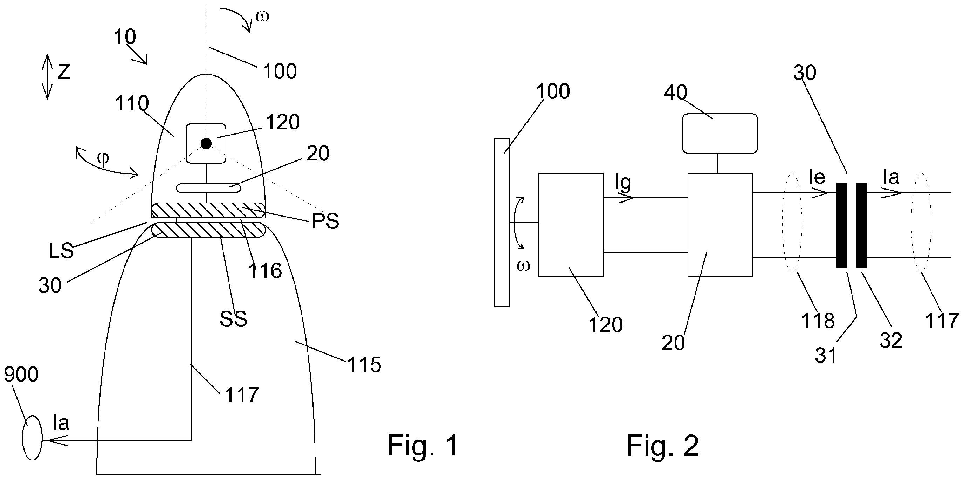

Die Figur 1 zeigt in einer schematischen Seitenansicht ein Ausführungsbeispiel für eine Windenergieanlage 10, die zum Erzeugen elektrischer Energie geeignet ist. Die Windenergieanlage 10 weist eine Gondel 110 auf, an der ein Propeller 100 drehbar befestigt ist. Bei der Darstellung gemäß Figur 1 ist der Propeller 100 um eine Achse drehbar, die senkrecht zur Bildebene in Figur 1 steht.

Die Gondel 110 wird von einem Turm 115 getragen, und zwar derart, dass die Gondel 110 um die in der Figur 1 mit dem Bezugszeichen Z gekennzeichnete Vertikale drehbar ist. Das Drehen um die Vertikale Z ist in der Figur 1 mit einem Doppelpfeil mit dem Bezugszeichen ϕ gekennzeichnet.

Die Figur 1 lässt darüber hinaus erkennen, dass zwischen der drehbaren Gondel 110 und dem feststehenden Turm 115 ein elektromagnetischer Drehübertrager 30 vorgesehen ist, der die von einem in der drehbaren Gondel 110 angeordneten Generator 120 erzeugte elektrische Energie in eine im Turm 115 verlegte elektrische Leitung 117 einspeisen kann. Die elektrische Leitung 117 steht mit einem externen Energieübertragungsnetz in Verbindung, das in der Figur 1 nur schematisch dargestellt und dort mit dem Bezugszeichen 900 gekennzeichnet ist.

In der Figur 1 lässt sich darüber hinaus erkennen, dass der Generator 120, der mechanisch vom Propeller 100 angetrieben wird, ausgangsseitig mit einem Umrichter 20 in Verbindung steht, der den Generator 120 und den Drehübertrager 30 miteinander koppelt.

Der Drehübertrager 30 weist eine Primärseite auf, die in der Figur 1 mit dem Bezugszeichen PS gekennzeichnet ist, sowie eine Sekundärseite, die in der Figur 1 das Bezugszeichen SS trägt. Bei dem Drehübertrager 30 handelt es sich vorzugsweise um einen elektrischen Transformator, bei dem die Primärseite gegenüber der Sekundärseite gedreht werden kann.

Auf der Primärseite PS des Drehübertrager 30 bilden aus Gründen der Übersicht nicht näher gezeigte elektrische Spulenpakete in Form von Spulenringsegmenten vorzugsweise mindestens ein ringförmiges primäres Drehstromspulensystem, das unter Bildung mindestens eines ringförmigen Luftspaltes mindestens einem ringförmigen sekundären Drehstromspulensystem gegenüberliegt. Das ringförmige sekundäre Drehstromspulensystem wird ebenfalls durch elektrische Spulenpakete in Form von Spulenringsegmenten gebildet; diese liegen denen des primären Drehstromspulensystems gegenüber. Die Drehstromspulensysteme sind vorzugsweise dreiphasig oder aber mindestens dreiphasig.

Die Figur 2 zeigt die im Zusammenhang mit der Figur 1 erläuterten Komponenten wie beispielsweise den Propeller 100 und den einen Generatorstrom Ig erzeugenden Generator 120 gemäß Figur 1 in einer anderen Darstellung sowie - näher im Detail - außerdem ein Ausführungsbeispiel für einen Drehübertrager 30, der bei der Windenergieanlage 10 gemäß Figur 1 eingesetzt werden kann.

Es lässt sich in der Figur 2 erkennen, dass der Drehübertrager 30 auf seiner Primärseite PS ein primäres Drehstromspulensystem 31 und auf seiner Sekundärseite SS ein sekundäres Drehstromspulensystem 32 aufweist. Die beiden Drehstromspulensysteme 31 und 32 sind mechanisch voneinander getrennt, aber miteinander magnetisch gekoppelt. Die Drehstromspulensysteme 31 und 32 sind vorzugsweise dreiphasig oder aber mindestens dreiphasig. Demgemäß handelt es sich bei den elektrischen Leitungen 117 sowie 118 vorzugsweise um dreiphasige oder aber mindestens dreiphasige Leitungen.

Das primäre Drehstromspulensystem 31 und das sekundäre Drehstromspulensystem 32 sind derart aufeinander abgestimmt, dass das Übersetzungsverhältnis größer als 1 ist und somit die auf der Sekundärseite SS erzeugte Sekundärspannung größer als die auf der Primärseite eingespeiste Primärspannung ist. Ein solches Verhalten kann durch geeignete Wicklungszahlverhältnisse auf der Primärseite PS und der Sekundärseite SS erreicht werden. Vorzugsweise ist der Drehübertrager 30 derart ausgelegt, dass die Primärseite PS mit einer Primärspannung zwischen 100 V und 4 kV betrieben werden kann. Das Übersetzungsverhältnis des Drehübertragers 30 ist dabei vorzugsweise derart gewählt, dass die Sekundärspannung auf der Sekundärseite im Bereich einer Mittelspannung, vorzugsweise zwischen 10 und 100 kV liegt. Besonders bevorzugt beträgt die Mittelspannung 20 kV, da eine solche Spannung bei Energieversorgungsnetzen üblich ist.

Durch die beschriebene Ausgestaltung des Drehübertragers 30 lässt sich erreichen, dass dieser als elektrischer Transformator arbeitet, der die vom Generator 120 erzeugte elektrische Spannung, bei der es sich üblicherweise um eine Nieder- bzw. Mittelspannung handelt, auf ein höheres Niveau, wie beispielsweise eine Mittelspannung von 20 kV, hochtransformiert.

Zusätzlich zu der Funktion eines elektrischen Transformators dient der Drehübertrager dazu, ein Drehen der drehbaren Gondel 110 entlang der Pfeilrichtung ϕ in Figur 1 zu ermöglichen. Hierzu kann beispielsweise der Umrichter 20 herangezogen werden, der von einer Steuereinrichtung 40 angesteuert wird.

Im Normalbetrieb, wenn die drehbare Gondel 110 nicht verschwenkt werden soll, wird die Steuereinrichtung 40 den Umrichter 20 derart ansteuern, dass der in den Drehübertrager 30 über die Leitung 118 eingespeiste bzw. umgerichtete Strom Ie von seiner Frequenz her der Netzfrequenz des externen E-nergieübertragungsnetzes 900 (siehe Figur 1) entspricht, so dass auch der vom Drehübertrager 30 ausgangsseitig abgegebene Ausgangsstrom Ia die entsprechende Netzfrequenz aufweist. Im Falle einer solchen Ansteuerung des Umrichters 20 durch die Steuereinrichtung 40 wird der Drehübertrager 30 kein oder zumindest kein nennenswertes Drehmoment auf die drehbare Gondel 110 ausüben.

Soll hingegen die drehbare Gondel 110 verschwenkt werden, so kann die Steuereinrichtung 40 den Umrichter 20 derart ansteuern, dass der umgerichtete Strom Ie von seiner Frequenz bzw. Phasenlage nicht mehr der Netzfrequenz des externen Energieübertragungsnetzes 900 entspricht. In einem solchen Fall wird der Drehübertrager 30 aufgrund des Schlupfes (wie bei einer Asynchronmaschine) zwischen den Magnetfeldern des primären Drehstromspulensystems 31 und des sekundären Drehstromspulensystems 32 ein Drehmoment erzeugen, das zu einem Verschwenken der Gondel 110 relativ zum Turm 115 führt.

Mit anderen Worten besteht die Funktion des Drehübertragers 30 gemäß Figur 2 nicht nur darin, eine Veränderung des Spannungsniveaus auf der Sekundärseite SS des Drehübertragers 30 im Vergleich zur Primärseite PS hervorzurufen, sondern darüber hinaus auch darin, ein Verschwenken der drehbaren Gondel 110 - beispielsweise durch eine entsprechende Ansteuerung des Umrichters 20 - zu ermöglichen. Der Drehübertrager 30 hat also zumindest zwei Funktionen, nämlich zum einen eine elektrische Übertragungsfunktion und zum anderen eine mechanische Verstellfunktion durch Erzeugen eines Drehmoments.

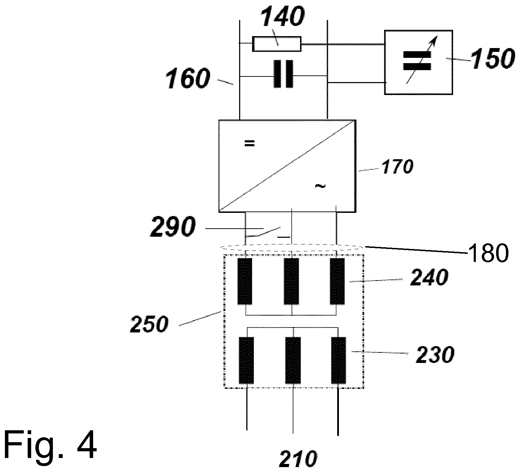

Wie weiter unten noch näher im Zusammenhang mit der Figur 4 erläutert wird, kann eine Drehmomenterzeugung auch dadurch hervorgerufen werden, dass bei dem umgerichteten Strom Ie zwei der Phasenleiter kurzgeschlossen werden; in einem solchen Falle basiert die Drehmomentbildung anschaulich beschrieben auf dem weiterhin ungestörten Drehen des Magnetfelds auf der Sekundärseite SS des Drehübertragers 30 und der Ausbildung eines stehendes Feldes auf der Primärseite.

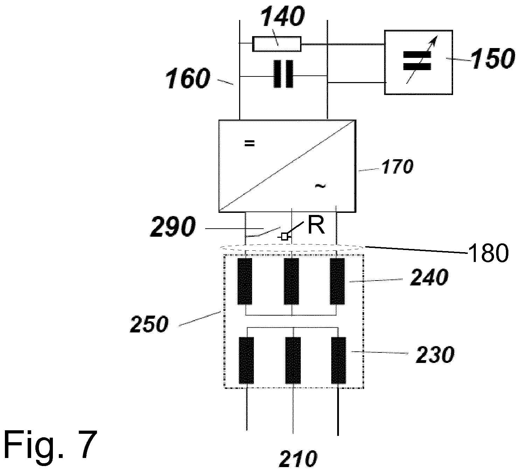

Alternativ kann anstelle eines Kurzschließens durch Zuschalten eines Widerstandes R bei zwei der Phasenleiter Energie bzw. Leistung entnommen werden; dies zeigt beispielhaft die Figur 7.

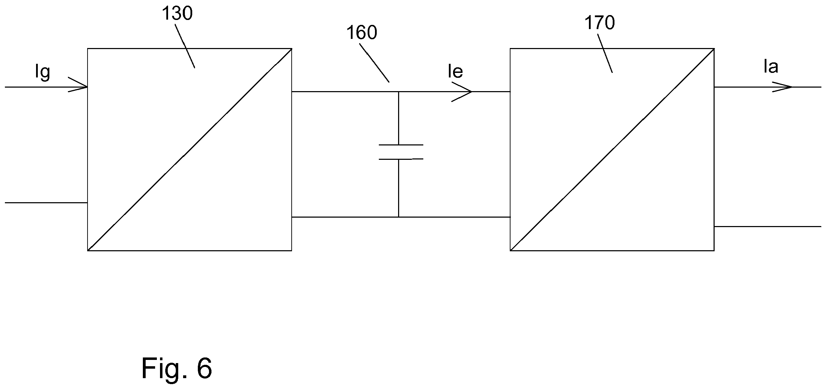

Die Figur 6 zeigt ein Ausführungsbeispiel für einen möglichen internen Aufbau des Umrichters 20 gemäß Figur 2. Der Umrichter 20 umfasst eine generatorseitige Umrichtereinheit 130 in Form eines Gleichrichters, einen elektrischen Gleichspannungszwischenkreis 160 sowie eine netzseitige Umrichtereinheit 170 in Form eines Wechselrichters umfassen.

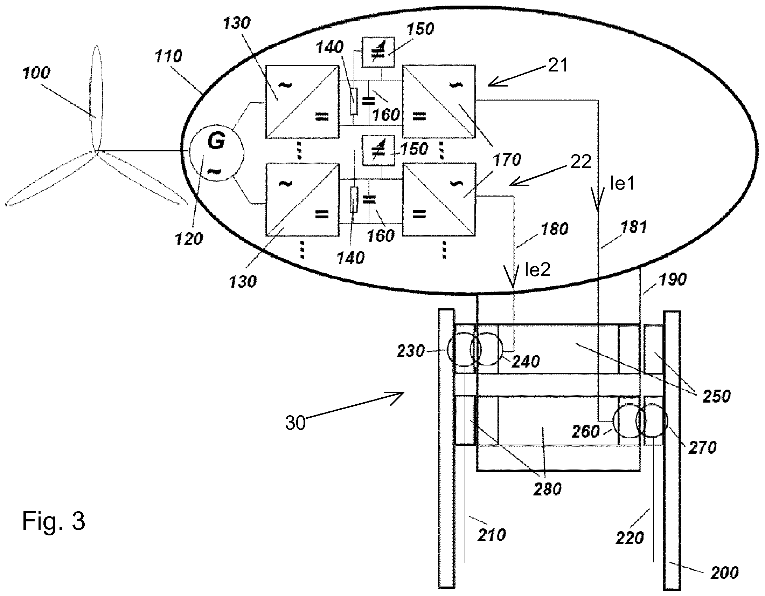

Die Figur 3 zeigt ein weiteres Ausführungsbeispiel für einen Umrichter 20 sowie einen Drehübertrager 30, die bei der Windenergieanlage 10 gemäß Figur 1 eingesetzt werden können. Die Figur 3 zeigt dabei nochmals im Detail den Propeller 100, die drehbare Gondel 110 sowie den Turm 115.

Bei dem Ausführungsbeispiel gemäß Figur 3 weist der Umrichter 20 zwei Umrichterzweige 21 und 22 auf, die jeweils eine generatorseitige Umrichtereinheit 130, einen elektrischen Gleichspannungszwischenkreis 160 sowie eine netzseitige Umrichtereinheit 170 umfassen. Darüber hinaus umfasst jeder der Umrichterzweige 21 und 22 beispielsweise jeweils einen Chopperwiderstand 140 sowie einen Chopper 150, deren Funktion weiter unten im Zusammenhang mit der Arbeitsweise des Umrichters 20 näher erläutert wird.

Die beiden Umrichterzweige 21 und 22 erzeugen jeweils umgerichtete Ströme Ie1 und Ie2, die über zugeordnete mehrphasige, vorzugsweise dreiphasige, Anschlussleitungen 180 bzw. 181 in den Drehübertrager 30 eingespeist werden.

Der Drehübertrager 30 weist bei dem Ausführungsbeispiel gemäß Figur 3 zwei Drehübertragereinheiten auf, nämlich eine erste Drehübertragereinheit, die mit dem Bezugszeichen 250 gekennzeichnet ist, sowie eine zweite Drehübertragereinheit, die mit dem Bezugszeichen 280 gekennzeichnet ist.

Die erste Drehübertragereinheit 250 umfasst ein erstes primäres Drehstromspulensystem 230 und ein erstes sekundäres Drehstromspulensystem 240.

Die zweite Drehübertragereinheit 280 umfasst ein zweites primäres Drehstromspulensystem 260 und ein zweites sekundäres Drehstromspulensystem 270.

Die beiden Drehübertragereinheiten 250 und 280 sind vorzugsweise hinsichtlich ihrer Magnetfelddrehrichtungen unterschiedlich: So kann beispielsweise die erste Drehübertragereinheit 250 mit einem rechts drehenden Drehfeldsystem arbeiten und die zweite Drehübertragereinheit 280 mit einem links drehenden.

Ausgangsseitig stehen die beiden Drehübertragereinheiten 250 und 280 mit Ausgangsleitungen 210 und 220 in Verbindung, die mit der Energieübertragungsleitung 117 gemäß Figur 1 phasenrichtig verschaltet sind.

Die Drehübertragereinheiten 250 und 280 sind - wie erwähnt - vorzugsweise drei- oder mehrphasig; entsprechendes gilt für ihre primären und sekundären Drehstromspulensysteme. Auch die Leitungen 210 und 220 weisen die entsprechende Phasenzahl auf und sind demgemäß entsprechend drei- oder mehrphasig. Auch die Energieübertragungsleitung 117 weist die entsprechende Phasenzahl, beispielsweise drei Phasen, auf.

Die beiden Umrichterzweige 21 und 22 werden von einer in der Figur 3 nicht dargestellten Steuereinrichtung 40 angesteuert. Durch die Ansteuerung wird erreicht, dass die Umrichterzweige 21 und 22 ausgangsseitig die bereits erwähnten umgerichteten Ströme Ie1 und Ie2 erzeugen, die in den Drehübertrager 30 eingespeist werden.

Durch die Ansteuerung der beiden Umrichterzweige 21 und 22 kann die Steuereinrichtung dafür sorgen, dass der Drehübertrager 30 ein Drehmoment zum Verdrehen der drehbaren Gondel 110 entlang der einen Drehrichtung oder entlang der entgegen gesetzten Drehrichtung hervorruft. Dies kann durch entsprechende Ausgestaltung der umgerichteten Ströme Ie1 und Ie2 nach Betrag und Phase erfolgen:
Soll kein Drehen der drehbaren Gondel 110 erfolgen, so ist die Phasenlage zwischen den umgerichteten Strömen Ie1 und Ie2 beispielsweise vorzugsweise gleich 180°, und die Amplituden der umgerichteten Ströme Ie1 und Ie2 sind gleich groß.
Soll ein Drehen der drehbaren Gondel 110 erfolgen, so kann dies beispielsweise dadurch hervorgerufen werden, dass die Phasenlage zwischen den umgerichteten Strömen Ie1 und Ie2 verändert und/oder die Amplituden der umgerichteten Ströme Ie1 und Ie2 unterschiedlich eingestellt werden.

Ein Drehen der drehbaren Gondel 110 kann bei der Ausführungsvariante gemäß Figur 3 darüber hinaus auch dadurch hervorgerufen werden, dass wie bei einer untersynchronen Stromrichterkaskadenschaltung mittels der Chopper 150 bzw. der Chopperwiderstände 140 bei einem der Umrichterzweige 21 bzw. 22 mehr Energie entnommen wird als im anderen Umrichterzweig, so dass die mittels der umgerichteten Ströme Ie1 und Ie2 in die elektrischen Leitungen 180 und 181 eingespeisten elektrischen Leistungen ungleich sind. In einem solchen Fall wird eine der beiden Drehübertragereinheiten 250 oder 280 ein größeres Drehmoment als die jeweils andere ausüben, so dass ein resultierendes Drehmoment auftreten kann, das zu einem Drehen der drehbaren Gondel 110 in der jeweils gewünschten Drehrichtung führt.

Die Figur 3 lässt darüber hinaus ein Ausführungsbeispiel für das Drehlager 116 gemäß Figur 1 erkennen. So ist bei dem Ausführungsbeispiel gemäß Figur 3 das Drehlager 116 durch einen Gondelschacht 190 der drehbaren Gondel 110 sowie einen Turmschacht 200 des Turms 115 gebildet. Der Gondelschacht 190 ist in den Turmschacht 200 eingeschoben und ermöglicht ein Schwenken der drehbaren Gondel 110 um den Turm 115.

Im Zusammenhang mit der Figur 4 ist schematisch eine weitere Möglichkeit gezeigt, wie ein Drehen der Gondel 110 um den Turm 115 gemäß Figur 1 hervorgerufen werden kann.

Die Figur 4 zeigt mit Bezugnahme auf Figur 3 einen Schalter 290, der zwei der Phasen der dreiphasigen Leitung 180 kurzschließen kann, um auf der Primärseite PS der ersten Drehübertragereinheit 250 das Drehfeld zu stören und zu schwächen, so dass es durch die parallele ungestörte Drehübertragereinheit 280 zu einem resultierenden Drehmoment kommen kann, das ein Verdrehen der Gondel 110 hervorruft.

Alternativ (oder zusätzlich) kann der Schalter 290 (oder ein weiterer Schalter 290) auch zwischen dem zweiten Umrichterzweig 22 und der zweiten Drehübertragereinheit 280 angeordnet sein; das Prinzip der Drehmomenterzeugung gilt dann entsprechend.

Im Übrigen ist es möglich, einen Schalter 290 auch in der dreiphasigen Leitung 118 zwischen dem Umrichter 20 und der Primärseite PS des Drehübertragers 30 gemäß Figur 2 vorzusehen. Kommt es zu einem Kurzschluss zwischen zwei Phasen der dreiphasigen Leitung 118 gemäß Figur 2, so wird ein Drehmoment durch das sich drehende Magnetfeld der Sekundärseite SS, die vom externen Energieübertragungsnetz 900 gespeist wird, erzeugt.

Die Figur 7 zeigt eine Variante, bei der der Schalter 290 einen Widerstand R zwischen zwei der Phasenleiter schaltet, um eine Energieentnahme zu erreichen, durch die wiederum ein Drehen der Gondel 110 hervorgerufen wird. Die Ausführungen im Zusammenhang mit der Figur 4 gelten bei dieser Variante gemäß Figur 7 entsprechend. Die Variante gemäß Figur 7 kann somit ebenfalls bei den Ausführungsbeispielen gemäß den Figuren 2 und 3 eingesetzt werden.

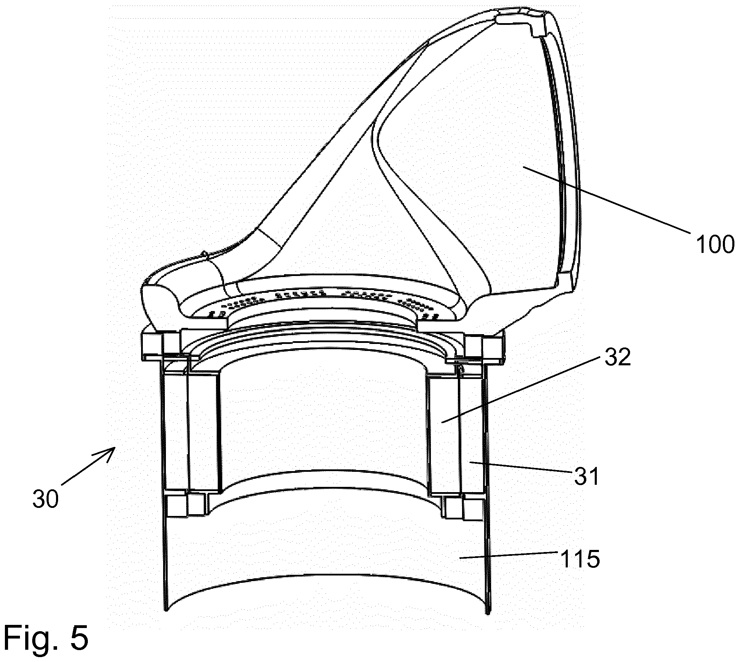

Die Figur 5 zeigt ein Ausführungsbeispiel für einen möglichen mechanischen Aufbau für den Drehübertrager 30 gemäß Figur 2. Man erkennt von dem Drehübertrager 30 das primäre Drehstromspulensystem 31 sowie das sekundäre Drehstromaspulensystem 32.

Zusammengefasst sind oben im Zusammenhang mit den Figuren 1 bis 7 Ausführungsbeispiele offenbart, die je nach Ausgestaltung eines oder mehrere der folgenden Eigenschaften oder Merkmale aufweisen können (aber nicht müssen):
Möglich ist die Nutzung des Drehübertragerprinzips zusammen mit einem Mehrsystemumrichter zur Energieübertragung von Gondel in den Turm und damit zum Netzanschlusspunkt und gleichzeitiger Drehung der Gondel durch entsprechende lagewinkelabhängige Stromkomponente der Hauptumrichters zur Erzeugung eines tangentialen Drehmomentes innerhalb des Drehübertragers bei gleichzeitiger Nutzung des Drehübertragers als Umrichter-Mittelspannungstrafo. Angeordnet wird der Drehübertrager vorzugsweise zwischen Gondel und Turmkopf als Baugruppe mit einem mechanischen Turmflansch, einem mechanischen Gondelflansch, einem Mittelspannungsanschluss am Turmflansch, Niederspannungsanschlüsse am Gondelflansch, mit vorzugsweise zwei mechanischen Lagern (z. B. Kugeldrehverbinder) zur Sicherstellung des Luftspaltes zwischen dem Stator und dem Rotor und einem kapazitiven Übertragungssystem für Daten.

Damit entfallen die klassischen Trafos im Turm oder in der Gondel, die Azimutantriebe und die entsprechenden Antriebe (Drives) mit Schaltschränken und Schaltgeräten. Die Gondel kann ohne Begrenzung dem Wind nachgeführt werden, ohne dass nach dem Erreichen der Winkelgrenze zurückgedreht werden muss. Der Leistungskabelloop (Leistungskabelschleife) entfällt total. Man kann mittels Schienen mit Mittelspannung im Turm operieren. Die Bereitstellung von Kommutierungsinduktivität des "Drehübertragertrafos" ist in großen Bereichen möglich. Modularität und mehrere Systeme sowohl auf der Mittelspannungsseite, als auch auf der Niederspannungsseite sind möglich. Für die Erzeugung des Gondeldrehmomentes kann lediglich Software genutzt werden, Stellglied ist der Generatorumrichter. Diese zusätzliche Antriebsleistung zum Drehen muss dieser auch bei der Lösung mit separaten Yaw-Antrieben ohnehin bereitstellen.

Ein oder mehrere Drehübertrager können so zwischen Turmkopf und Gondelschaft angeordnet werden, dass ein tangentiales Luftspaltmoment die Gondel je nach Richtung und Stärke dieses Drehmomentes in die eine oder andere Richtung dreht oder entgegen einer äußeren Kraft, die auf den Windanlagenrotor oder das Gondelgehäuse einwirkt, bremsend oder beschleunigend wirkt.

Eine entsprechend vorgesehene überlagerte Lageregelung lässt es zu, die Gondel zum Turm zu positionieren bzw. zur neuen Position hinzuführen.

Der oder die Drehübertrager können die Funktion der Mittelspannungstrafos übernehmen, die die Umrichter bzw. Umrichtersysteme mit dem Netz verbinden.

Die Drehübertrager kann neben dem induktiven Übertragungssystem/en kann auch ein oder mehrere kapazitive Übertragungssysteme beinhalten, die Daten vom stehenden Turm auf die drehbare Gondel übertragen können.

Die Drehübertrager können zusätzlich zum sekundären Drehstromspulensystem/en noch ein oder mehrere sekundäre Drehstromspulensysteme beinhalten, die zusätzliche in der Gondel notwendige Energieverbraucher mit der entsprechenden notwendigen Spannung/en getrennt von dem Hauptumrichtersystem versorgt.

Die Erzeugung des Drehmoments kann durch den netzseitigen Umrichter erfolgen.

Das notwendige Drehmoment kann auch durch Schließen eines Schalters (siehe Schalter 290 in den Figuren 4 und 7) erfolgen. Die beiden kurzgeschlossenen oder widerstandsmäßig belasteten Phasen des sekundären Systems wirken wie ein Kurzschlusskäfig eines Asynchronmotors. Es entsteht ein Anlaufmoment, das die Gondel in Richtung des Drehfeldes beschleunigt.

Werden zwei Drehübertrager verwendet, bei dem ein Drehübertrager mittels Rechtsdrehfeld betrieben wird, der andere mit einem Linksdrehfeld betrieben wird, kann die Schaltervariante nach Figur 4 oder Figur 7 entsprechend für beide Drehrichtungen verwendet werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Windenergieanlage
- 20: Umrichter
- 21: Umrichterzweig
- 22: Umrichterzweig
- 30: Drehübertrager
- 31: Drehstromspulensystem
- 32: Drehstromspulensystem
- 40: Steuereinrichtung
- 100: Propeller
- 110: Gondel
- 115: Turm
- 116: Drehlager
- 117: Leitung
- 118: Leitung
- 120: Generator
- 130: Umrichtereinheit
- 140: Chopperwiderstand
- 150: Chopper
- 160: Gleichspannungszwischenkreis
- 170: Umrichtereinheit
- 180: Anschlussleitung
- 181: Anschlussleitung
- 190: Gondelschacht
- 200: Turmschacht
- 210: Ausgangsleitung
- 220: Ausgangsleitung
- 230: Drehstromspulensystem
- 240: Drehstromspulensystem
- 250: Drehübertragereinheit
- 260: Drehstromspulensystem
- 270: Drehstromspulensystem
- 280: Drehübertragereinheit
- 290: Schalter
- 900: Energieübertragungsnetz

- Ia: Ausgangsstrom
- Ie: Strom
- Ie1: Strom
- Ie2: Strom
- Ig: Generatorstrom
- PS: Primärseite
- R: Widerstand
- SS: Sekundärseite
- Z: Vertikale
- ϕ: Doppelpfeil

## Patentansprüche

1. Windenergieanlage (10) zum Erzeugen elektrischer Energie mit mindestens einem an einer Gondel (110) drehbar befestigten Propeller (100), einem mit dem Propeller (100) gekoppelten Generator (120) und einem die Gondel (110) tragenden Turm (115), wobei die Gondel (110) relativ zum Turm (115) drehbar ist,
wobei
zwischen der Gondel (110) und dem Turm (115) ein elektromagnetischer Drehübertrager (30) angeordnet ist, der die von dem Generator (120) erzeugte elektrische Energie in eine im Turm (115) verlegte elektrische Leitung einspeist.
**dadurch gekennzeichnet, dass**
- die Windenergieanlage (10) eine Steuereinrichtung (40) aufweist, die mit einem Umrichter (20) in Verbindung steht und diesen ansteuert,
- wobei die Steuereinrichtung (40) derart ausgestaltet ist, dass sie im Falle, dass die Gondel (110) relativ zum Turm (115) gedreht werden soll, die Ansteuerung des Umrichters (20) derart vornimmt, dass der Drehübertrager (30) ein mechanisches Drehmoment zum Drehen der Gondel (110) relativ zum Turm (115) erzeugt und die Gondel (110) durch dieses Drehmoment gedreht wird.

2. Windenergieanlage (10) nach Anspruch 1,
**dadurch gekennzeichnet, dass**
der Drehübertrager (30) ein primäres Drehstromspulensystem (31) und ein sekundäres Drehstromspulensystem (32) umfasst, die über einen Spalt mechanisch voneinander getrennt, aber magnetisch miteinander gekoppelt sind.

3. Windenergieanlage (10) nach einem der voranstehenden Ansprüche,
**dadurch gekennzeichnet, dass**
die Wicklungszahl auf der Primärseite (PS) des Drehübertragers (30) und die auf der Sekundärseite (SS) des Drehübertragers (30) derart gewählt sind, dass die auf der Sekundärseite erzeugte Sekundärspannung größer als die auf der Primärseite eingespeiste Primärspannung ist.

4. Windenergieanlage (10) nach einem der voranstehenden Ansprüche,
**dadurch gekennzeichnet, dass**
- die Primärspannung auf der Primärseite des Drehübertragers (30) im Bereich zwischen 100 V und 4 kV liegt und
- das Übertragungsverhältnis des Drehübertragers (30) derart gewählt ist, dass die Sekundärspannung auf der Sekundärseite im Bereich zwischen 10 und 100 kV liegt.

5. Windenergieanlage (10) nach einem der voranstehenden Ansprüche,
**dadurch gekennzeichnet, dass**
der Umrichter (20) elektrisch zwischen dem Generator (120) und dem Drehübertrager (30) angeordnet ist und den Strom in die Primärseite des Drehübertragers (30) einspeist

6. Windenergieanlage (10) nach einem der voranstehenden Ansprüche,
**dadurch gekennzeichnet, dass**
- die im Turm (115) verlegte elektrische Leitung (117) mit einem externen Energieübertragungsnetz (900) mit einer vorgegebenen Netzfrequenz in Verbindung steht und
- der Umrichter (20) einen Primärstrom in den Drehübertrager (30) einspeist, dessen Frequenz und/oder Phaselage von der Netzfrequenz bzw. Netzphasenlage abweicht, wenn der Drehübertrager (30) ein Drehmoment zum Drehen der Gondel (110) relativ zum Turm (115) erzeugen soll, und dadurch insbesondere einen magnetischen Schlupf zwischen dem primären Drehstromspulensystem (31) und dem sekundären Drehstromspulensystem (32) hervorruft.

7. Windenergieanlage (10) nach einem der voranstehenden Ansprüche,
**dadurch gekennzeichnet, dass**
- der Umrichter (20) zumindest zwei Umrichterzweige (21, 22) aufweist, die jeweils einen Primärteilstrom erzeugen,
- der Drehübertrager (30) zumindest zwei Drehübertragereinheiten (250, 280) aufweist, die jeweils ein primäres Drehstromspulensystem (230, 260) und ein mit diesem gekoppeltes sekundäres Drehstromspulensystem (240, 270) umfassen,
- die Drehübertragereinheiten eingangsseitig jeweils von einem der Umrichterzweige gespeist werden und ausgangsseitig jeweils mit der im Turm (115) verlegten elektrischen Leitung in Verbindung stehen, und
- der Drehübertrager (30) ein Drehmoment zur Drehung der Gondel (110) relativ zum Turm (115) hervorruft, falls von den Drehübertragereinheiten erzeugte Drehmomente ein Summendrehmoment ungleich Null erzeugen.

8. Windenergieanlage (10) nach Anspruch 7,
**dadurch gekennzeichnet, dass**
- eine der Drehübertragereinheiten ein rechtsdrehendes Magnetfeldsystem und ein anderes ein linksdrehendes Magnetfeldsystem erzeugt und
- die Steuereinrichtung (40) und der Umrichter (20) die Drehrichtung der Gondel (110) festlegen, indem sie mit dem rechtsdrehenden Magnetfeldsystem oder dem linksdrehenden Magnetfeldsystem ein Drehmoment zum Drehen der Gondel (110) erzeugen.

9. Verfahren zum Betreiben einer Windenergieanlage (10) zum Erzeugen elektrischer Energie, wobei die Windenergieanlage (10) einen an einer Gondel (110) drehbar befestigten Propeller (100), einen mit dem Propeller (100) gekoppelten Generator (120) und einen die Gondel (110) tragenden Turm (115) aufweist, wobei die Gondel (110) relativ zum Turm (115) drehbar ist,
wobei
- zwischen der Gondel (110) und dem Turm (115) ein elektromagnetischer Drehübertrager (30) angeordnet ist und
- die von dem Generator (120) erzeugte elektrische Energie mittels des Drehübertragers (30) in eine im Turm (115) verlegte elektrische Leitung eingespeist wird,
**dadurch gekennzeichnet, dass**
die Gondel (110) relativ zum Turm (115) gedreht wird, indem mit einem zwischen dem Generator (120) und dem Drehübertrager (30) elektrisch angeordneten Umrichter (20) der in den Drehübertrager (30) eingespeiste Strom derart eingestellt wird, dass der Drehübertrager (30) ein mechanisches Drehmoment zum Drehen der Gondel (110) relativ zum Turm (115) erzeugt.

## Claims

1. Wind energy installation (10) for generating electrical energy comprising at least one propeller (100) fastened to a nacelle (110) such that it is able to rotate, a generator (120) coupled to the propeller (100) and a tower (115) supporting the nacelle (110), wherein the nacelle (110) is able to rotate relative to the tower (115),
wherein
an electromagnetic rotary transformer (30) is arranged between the nacelle (110) and the tower (115), said rotary transformer feeding the electrical energy generated by the generator (120) into an electrical line laid in the tower (115),
**characterized in that**
- the wind energy installation (10) has a control device (40), which is connected to a converter (20) and actuates said converter,
- wherein the control device (40) is designed in such a way that, in the case that the nacelle (110) is intended to be rotated relative to the tower (115), said control device actuates the converter (20) in such a way that the rotary transformer (30) generates a mechanical torque for rotating the nacelle (110) relative to the tower (115) and the nacelle (110) is rotated by said torque.

2. Wind energy installation (10) according to Claim 1,
**characterized in that**
the rotary transformer (30) comprises a primary three-phase coil system (31) and a secondary three-phase coil system (32), which are mechanically separated from one another by means of a gap but are magnetically coupled to one another.

3. Wind energy installation (10) according to either of the preceding claims,
**characterized in that**
the number of windings on the primary side (PS) of the rotary transformer (30) and that on the secondary side (SS) of the rotary transformer (30) are selected in such a way that the secondary voltage generated on the secondary side is greater than the primary voltage fed in on the primary side.

4. Wind energy installation (10) according to one of the preceding claims,
**characterized in that**
- the primary voltage on the primary side of the rotary transformer (30) is in the range between 100 V and 4 kV and
- the transformation ratio of the rotary transformer (30) is selected in such a way that the secondary voltage on the secondary side is in the range between 10 and 100 kV.

5. Wind energy installation (10) according to one of the preceding claims,
**characterized in that**
the converter (20) is electrically arranged between the generator (120) and the rotary transformer (30) and feeds the current into the primary side of the rotary transformer (30).

6. Wind energy installation (10) according to one of the preceding claims,
**characterized in that**
- the electrical line (117) laid in the tower (115) is connected to an external energy transmission network (900) at a prescribed network frequency and
- the converter (20) feeds a primary current into the rotary transformer (30), the frequency and/or phase angle of said primary current deviating from the network frequency or network phase angle when the rotary transformer (30) is intended to generate a torque for rotating the nacelle (110) relative to the tower (115), and thereby causes, in particular, a magnetic slip between the primary three-phase coil system (31) and the secondary three-phase coil system (32) .

7. Wind energy installation (10) according to one of the preceding claims,
**characterized in that**
- the converter (20) has at least two converter branches (21, 22), which each generate a primary component current,
- the rotary transformer (30) has at least two rotary transformer units (250, 280), which each comprise a primary three-phase coil system (230, 260) and a secondary three-phase coil system (240, 270) coupled thereto,
- the rotary transformer units are each fed on the input side by one of the converter branches and are each connected on the output side to the electrical line laid in the tower (115), and
- the rotary transformer (30) causes a torque for rotating the nacelle (110) relative to the tower (115) if torques generated by the rotary transformer units generate a total torque different from zero.

8. Wind energy installation (10) according to Claim 7,
**characterized in that**
- one of the rotary transformer units generates a magnetic field system rotating clockwise and another generates a magnetic field system rotating anti-clockwise and
- the control device (40) and the converter (20) determine the direction of rotation of the nacelle (110) by virtue of them generating a torque for rotating the nacelle (110) by way of the magnetic field system rotating clockwise or the magnetic field system rotating anti-clockwise.

9. Method for operating a wind energy installation (10) for generating electrical energy, wherein the wind energy installation (10) comprises a propeller (100) fastened to a nacelle (110) such that it is able to rotate, a generator (120) coupled to the propeller (100) and a tower (115) supporting the nacelle (110), wherein the nacelle (110) is able to rotate relative to the tower (115),
wherein
- an electromagnetic rotary transformer (30) is arranged between the nacelle (110) and the tower (115) and
- the electrical energy generated by the generator (120) is fed into an electrical line laid in the tower (115) by means of the rotary transformer (30),
**characterized in that**
the nacelle (110) is rotated relative to the tower (115) by virtue of the current fed into the rotary transformer (30) using a converter (20) electrically arranged between the generator (120) and the rotary transformer (30) being set in such a way that the rotary transformer (30) generates a mechanical torque for rotating the nacelle (110) relative to the tower (115) .

## Revendications

1. Éolienne (10) destinée à générer de l'énergie électrique, comprenant au moins une hélice (100) fixée tournante à une nacelle (110), un générateur (120) couplé à l'hélice (100) et une tour (115) portant la nacelle (110), dans laquelle la nacelle (110) peut tourner par rapport à la tour (115),
dans laquelle
il est prévu entre la nacelle (110) et la tour (115) un transformateur rotatif électromagnétique (30) qui injecte l'énergie électrique générée par le générateur (120) dans une ligne électrique installée dans la tour (115),
**caractérisée en ce que**
- l'éolienne (10) comporte un dispositif de commande (40) qui est connecté à un onduleur (20) et commande ce dernier,
- dans laquelle le dispositif de commande (40) est conçu de manière à ce que, dans le cas où la nacelle (110) doit être amenée à tourner par rapport à la tour (115), il assure la commande de l'onduleur (20) de telle façon que le transformateur rotatif (30) génère un couple mécanique permettant de faire tourner la nacelle (110) par rapport à la tour (115) et que la nacelle (110) soit mise en rotation au moyen dudit couple.

2. Éolienne (10) selon la revendication 1,
**caractérisée en ce que**
le transformateur rotatif (30) comprend un système de bobine triphasé primaire (31) et un système de bobine triphasé secondaire (32) séparés mécaniquement l'un de l'autre par un interstice mais couplés magnétiquement l'un à l'autre.

3. Éolienne (10) selon l'une des revendications précédentes,
**caractérisée en ce que** le nombre d'enroulements du côté primaire (PS) du transformateur rotatif (30) et celui du côté secondaire (SS) du transformateur rotatif (30) sont sélectionnés de manière à ce que la tension secondaire générée du côté secondaire soit supérieure à la tension primaire injectée sur le côté primaire.

4. Éolienne (10) selon l'une des revendications précédentes,
**caractérisée en ce que**
- la tension primaire du côté primaire du transformateur rotatif (30) est comprise entre 100 V et 4 kV et
- le rapport de transmission du transformateur rotatif (30) est sélectionné de manière à ce que la tension secondaire du côté secondaire soit comprise entre 10 kV et 100 kV.

5. Éolienne (10) selon l'une des revendications précédentes,
**caractérisée en ce que**
l'onduleur (20) est disposé électriquement entre le générateur (120) et le transformateur rotatif (30) et injecte le courant dans le côté primaire du transformateur rotatif (30).

6. Éolienne (10) selon l'une des revendications précédentes,
**caractérisée en ce que**
- la ligne électrique (117) installée dans la tour (115) est connectée à un réseau de transmission d'énergie externe (900) ayant une fréquence de réseau prédéterminée et
- l'onduleur (20) injecte dans le transformateur rotatif (30) un courant primaire dont la fréquence et/ou la position de phase s'écarte de la fréquence du réseau ou de la position de phase du réseau, lorsque le transformateur rotatif (30) doit générer un couple permettant de faire tourner la nacelle (110) par rapport à la tour (115), provoquant ainsi notamment un glissement magnétique entre le système de bobine triphasé primaire (31) et le système de bobine triphasé secondaire (32).

7. Éolienne (10) selon l'une des revendications précédentes,
**caractérisé en ce que**
- l'onduleur (20) comporte au moins deux branches d'onduleur (21, 22) qui génèrent chacune un courant partiel primaire,
- le transformateur rotatif (30) comporte au moins deux unités de transformateur rotatif (250, 280) qui comprennent chacune un système de bobine triphasé primaire (230, 260) et un système de bobine triphasé secondaire (240, 270) couplé à ce dernier,
- les unités de transformateur rotatif sont respectivement alimentées côté entrée par l'une des branches et sont respectivement reliées côté sortie à la ligne électrique installée dans la tour (115), et
- le transformateur rotatif (30) génère un couple permettant de faire tourner la nacelle (110) par rapport à la tour (115) dans le cas où les couples générés par les unités de transformateur rotatif génèrent un couple total différent de zéro.

8. Éolienne (10) selon la revendication 7, **caractérisée en ce que**
- l'une des unités de transformateur rotatif génère un système de champ magnétique tournant en sens horaire et **en ce qu'**une autre d'entre elles génère un système de champ magnétique tournant en sens antihoraire, et
- le dispositif de commande (40) et l'onduleur (20) définissent le sens de rotation de la nacelle (110) en générant un couple permettant de faire tourner la nacelle (110) au moyen du système de champ magnétique tournant en sens horaire ou du système de champ magnétique tournant en sens antihoraire.

9. Procédé pour faire fonctionner une éolienne (10) destinée à générer de l'énergie électrique, dans lequel l'éolienne (10) comprend une hélice (100) fixée tournante à une nacelle (110), un générateur (120) couplé à l'hélice (100) et une tour (115) portant la nacelle (110), dans lequel la nacelle (110) peut tourner par rapport à la tour (115),
dans lequel
- il est prévu entre la nacelle (110) et la tour (115) un transformateur rotatif électromagnétique (30) et
- l'énergie électrique générée par le générateur (120) est injectée au moyen du transformateur rotatif (30) dans une ligne électrique installée dans la tour (115),
**caractérisé en ce que**
la nacelle (110) est amenée à tourner par rapport à la tour (115) en réglant le courant injecté dans le transformateur rotatif (30) au moyen d'un onduleur (20) qui est disposé électriquement entre le générateur (120) et le transformateur rotatif (30) de telle façon que le transformateur rotatif (30) génère un couple mécanique permettant de faire tourner la nacelle (110) par rapport à la tour (115).
